Europäisches Patentamt

European Patent Office

Office européen des brevets

(19)

(11) Publication number : **0 506 475 A2**

# (12) EUROPEAN PATENT APPLICATION

(21) Application number : **92302744.5**

(22) Date of filing : **27.03.92**

(51) Int. Cl.$^5$ : **C04B 35/46, C04B 35/66**

(30) Priority : **29.03.91 JP 91330/91**

(43) Date of publication of application :
**30.09.92 Bulletin 92/40**

(84) Designated Contracting States :
**BE DE FR GB IT SE**

(71) Applicant : **NGK INSULATORS, LTD.**
**2-56, Suda-cho, Mizuho-ku**
**Nagoya City Aichi Pref. (JP)**

(72) Inventor : **Noguchi, Yasushi**
**NGK Takemi-ryo, 34, Takemi-cho 1-chome**
**Mizuho-ku, Nagoya-city, Aichi-pref. 467 (JP)**
Inventor : **Fukao, Kaname**
**21-63, Aza-sagidera, Ohaza-goromaru**
**Inuyama-city, Aichi-pref. 484 (JP)**
Inventor : **Miwa, Shinichi**
**25, Kibougaoka 1-chome**
**Tajimi-city, Gifu-pref. 507 (JP)**

(74) Representative : **Paget, Hugh Charles Edward**
**et al**
**MEWBURN ELLIS 2 Cursitor Street**
**London EC4A 1BQ (GB)**

(54) **Aluminium titanate structure and process for producing the same.**

(57) An aluminum titanate structure produced by using a starting material containing at least an aluminum titanate cullet (AT cullet) whose aluminum titanate proportion is 90% or more, shaping the starting material and sintering the shaped material, comprises, as a main phase, crystal grains having an aspect ratio of 1.6 or more and an average projected diameter of 5-10 μm. Said structure has excellent thermal shock resistance and high actual break strain, and is preferably used in casting with metal(s) to produce a port liner, etc.

EP 0 506 475 A2

Jouve, 18, rue Saint-Denis, 75001 PARIS

## Background of the Invention and Related Art Statement

The present invention relates to an aluminum titanate structure having excellent thermal shock resistance and high actual break strain, as well as to a process for producing the structure.

A ceramic containing aluminum titanate as a base material has a low thermal expansion coefficient and a small Young's modulus. Hence, it has been used as an effective material for thermal shrinkage of metal, as in production, by casting with aluminum metal, of a port liner for the heat insulation of the inside of exhaust pipe of gasoline engine.

A port liner is required to have high thermal shock resistance because it is used at extremely high temperatures and under large heat gradients, and is further required to have excellent mechanical properties because it is used under severe conditions.

Because of such technical requirements for port liner, aluminum titanate has been considered as a ceramic for use in port liner, and various investigations have been made to develop an aluminum titanate material of high strength, in particular. For example, Japanese Patent Publication No. 3629/1982 discloses an aluminum titanate material of high strength comprising aluminum titanate as a main phase and $\emptyset$.3-8% by weight of rare earth elements selected from Y, La and Ce.

Japanese Patent Application Kokai No. 16476$\emptyset$/1989 discloses an aluminum titanate material which is made of starting materials of $Al_2O_3$, $TiO_2$ and quartz ($SiO_2$), which contains unreacted $TiO_2$, which has no crack and which can be casted together with a melt of non-ferrous metal(s) at temperatures of 8$\emptyset\emptyset$°C or less. Japanese Patent Application Kokai No. 257165/1989 discloses an aluminum titanate material which contains rare earth element oxide(s), mullite and iron oxide and which is stable at high temperatures.

Further, Japanese Patent Application Kokai No. 3$\emptyset$5854/1989 discloses an aluminum titanate material which contains iron oxide and mullite, which has high mechanical strengths and which is usable at a temperature range of 1,$\emptyset\emptyset\emptyset$-1,3$\emptyset\emptyset$°C.

The above materials, however, each have problems. The aluminum titanate material disclosed in Japanese Patent Publication No. 3129/1982 has a high strength because it comprises aluminum titanate as a main phase, but has drawbacks of small aspect ratio and small actual break strain. The aluminum titanate material disclosed in Japanese Patent Application Kokai No. 16476$\emptyset$/1989 uses only untreated raw materials as starting materials and has no crack, and therefore has drawbacks of small aspect ratio and small actual break strain. The aluminum titanate material disclosed in Japanese Patent Application Kokai No. 257165/1989 uses a starting material composed essentially of a single phase of $FeTiO_5$ and $Al_2TiO_5$, contains no vitreous phase and has a high strength, and therefore has drawbacks of small aspect ratio and small actual break strain. The aluminum titanate material disclosed in Japanese Patent Application Kokai No. 3$\emptyset$5854/1989 is produced by sintering at 1,3$\emptyset\emptyset$-1,45$\emptyset$°C and has a high strength, and therefore has drawbacks of small projected diameter, small aspect ratio and small actual break strain.

In order for an aluminum titanate (AT) material to have a large actual break strain, the material must consist of large grains and must contain many cracks at the grain boundaries. Such a material, however, has a drawback in that the cracks at the grain boundaries spread during the heat cycle, giving a reduced strength.

A port liner is required to have both actual break strain and heat cycle durability and must satisfy these two incompatible properties at high levels.

Hence, the objects of the present invention are to provide an aluminum titanate material which is free from the above-mentioned drawbacks of conventional aluminum titanate materials and which has excellent thermal shock resistance, large actual break strain and excellent heat cycle durability, and a process for producing said aluminum titanate material.

## Summary of the Invention

According to the present invention, there is provided an aluminum titanate structure comprising, as a main phase, crystal grains having an average aspect ratio of 1.6 or more and an average projected diameter of 5-1$\emptyset$ mm.

According to the present invention, there is further provided a process for producing an aluminum titanate structure, which comprises mixing an aluminum titanate cullet (AT cullet) (a) obtained by mixing a plurality of raw materials selected from the group consisting of an $Al_2O_3$ source, a $TiO_2$ source, a $SiO_2$ source, a $Fe_2O_3$ source, a MgO source, a rare earth element source and a mullite source, calcining the mixture so as to give an aluminum titanate proportion of 9$\emptyset$% or more, and grinding the calcination product, with a plurality of raw materials (b) selected from the group consisting of an $Al_2O_3$ source, a $TiO_2$ source, a $SiO_2$ source, a $Fe_2O_3$ source, a MgO source, a rare earth element source and a mullite source, shaping the mixture as a starting material and sintering the shaped material.

**Brief Description of the Drawing**

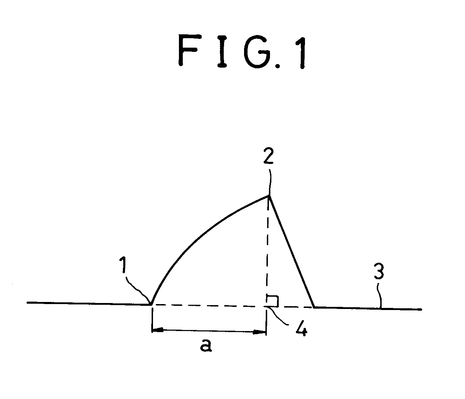

Fig. 1 is a strain-stress curve when a ceramic is subjected to a 4-point bending strength test by JIS R 1601.

**Detailed Description of the Invention**

The present inventor made research and found that an aluminum titanate material having a large actual break strain and excellent heat cycle durability can be obtained by allowing an aluminum titanate material to comprise crystal grains having a high strength between the grain boundaries, many cracks inside the grains, an average aspect ratio of 1.6 or more and an average projected diameter of 5-10 $\mu$m.

Preferably, the above aluminum titanate structure further comprises a vitreous phase and mullite, or a vitreous phase and rare earth element(s), or a vitreous phase, mullite and rare earth element(s). Further preferably, the aluminum titanate structure has an actual break strain of $5 \times 10^{-3}$ or more and a strength deterioration in heat cycle, of 0 or less.

When the average projected diameter of an aluminum titanate material is 5 $\mu$m or less, the strength is high and the actual break strain is $5 \times 10^{-3}$ or less. When the average projected diameter is 10 mm or more, the actual break strain is $5 \times 10^{-3}$ or more but the strength deterioration in heat cycle is 0 or more. When the average projected diameter is 5-10 $\mu$m and the average aspect ratio is less than 1.6, the actual break strain is $5 \times 10^{-3}$ or less or the strength deterioration in heat cycle is 0 or more.

In the process for producing an aluminum titanate structure according to the present invention, it is preferable to use a AT cullet (obtained by mixing a plurality of raw materials selected from the group consisting of an $Al_2O_3$ source, a $TiO_2$ source, a $SiO_2$ source, a $Fe_2O_3$ source, a MgO source, a rare earth element source and a mullite source, calcining the mixture so as to give an aluminum titanate proportion of 90% or more, and grinding the calcination product) in an amount of 5% by weight or more, preferably 20% by weight or more.

In the process, it is also preferable to use a AT cullet (obtained by mixing in a liquid phase a plurality of raw materials selected from the group consisting of an $Al_2O_3$ source, a $TiO_2$ source, a $SiO_2$ source, a $Fe_2O_3$ source, a MgO source, a rare earth element source and a mullite source, calcining the mixture so as to give an aluminum titanate proportion of 90% or more, and grinding the calcination product) in an amount of 5% by weight or more, preferably 20% by weight or more.

According to the present process, there can be obtained an aluminum titanate material wherein mullite, rare earth element(s), a vitreous phase, etc. are uniformly dispersed at the grain boundaries and thereby the aluminum titanate grains are strongly bonded to each other at the boundaries, and wherein each grain has many cracks inside and has an average projected diameter of 5-10 $\mu$m and an average aspect ratio of 1.6 or more.

**Examples**

The present invention is hereinafter described in more detail with reference to Examples. However, the present invention is by no means restricted to these Examples.

Description is first made on the process for producing aluminum titanate materials, comprising a raw material preparation step, a shaping step and a sintering step. Then, description is made on the methods for measuring the properties of the sintered materials (aluminum titanate structures) obtained, as well as on the results obtained.

**AT Cullet preparation step**

There were used two methods for AT cullet preparation, i.e. a method (A) preparing a AT cullet by a liquid phase mixing and a method (B) preparing a AT cullet by powder mixing. In the method (A), the raw materials shown in Table 1 were weighed so as to give a desired composition when converted to respective oxides; they were mixed in an aqueous solution; and a necessary amount of an aqueous $NH_4OH$ solution was added. Then, the resulting precipitate was washed to remove the impurity ions present therein; the precipitate after washing was calcined so as to give a desired aluminum titanate proportion; the calcination product was ground to obtain a AT cullet. In the method (B), the raw materials shown in Table 1 were weighed so as to give a desired composition; they were uniformly mixed by a dry method, or a wet method followed by drying; the mixture was calcined so as to give a desired aluminum titanate proportion; the calcination product was ground to obtain a AT cullet.

## Table 1

| AT Cullet No. | | 1 | 2 | 3 | 4 | 5 | 6 | 7 | 8 | 9 |
|---|---|---|---|---|---|---|---|---|---|---|
| Method of AT cullet preparation | | A | A | A | A | B | B | B | B | B |
| Raw materials | $Al_2O_3$ source | $Al_2(SO_4)_3$ | $Al_2(SO_4)_3$ | $AlCl_3 \cdot 6H_2O$ | $Al(NO_3)_3 \cdot 9H_2O$ | Calcined bauxite | Calcined bauxite | $\alpha$-Alumina | $\alpha$-Alumina | $\alpha$-Alumina |
| | $TiO_2$ source | $TiO\,SO_4$ | $TiCl_4$ | $TiBr_3 \cdot 6H_2O$ | $Ti_2(SO_4)$ | Rutile | Rutile | Rutile | Rutile | Anatase |
| | $SiO_2$ source | -- | $H_2[SiF_6]$ | $H_2[SiF_6]$ | $H_2[SiF_6]$ | $SiO_2$ glass | $SiO_2$ glass | -- | -- | Clay |
| | $Fe_2O_3$ source | $Fe_2(SO_4)_3$ | -- | -- | $FeCl_3$ | Ilmenite | -- | Red iron oxide | Red iron oxide | -- |
| | MgO source | $MgSO_4 \cdot 7H_2O$ | $MgCl_2$ | -- | $Mg(NO_3)_2 \cdot 6H_2O$ | Magnesite | Magnesite | -- | -- | $MgC_2O_4$ |
| | Rare earth source | -- | -- | -- | $YbCl_3 \cdot 6H_2O$ | -- | $CeO_2$ | -- | -- | -- |
| | Mullite source | -- | -- | -- | -- | -- | Mullite | -- | -- | Kaolin |
| Composition (wt%) | $Al_2O_3$ | 50 | 50 | 53 | 51 | 49 | 50 | 57 | 54 | 50 |
| | $TiO_2$ | 47 | 46.5 | 45 | 45 | 44 | 44 | 31 | 46 | 45 |
| | $SiO_2$ | 0 | 3 | 2 | 2 | 4 | 3 | 0 | 0 | 2 |
| | $Fe_2O_3$ | 2 | 0 | 0 | 1 | 2 | 0 | 12 | 0 | 2 |
| | MgO | 1 | 0.5 | 0 | 0.5 | 0.5 | 1.5 | 0 | 0 | 1 |
| | Rare earth | 0 | 0 | 0 | 0.5 | 0 | 1.5 | 0 | 0 | 0 |
| | Mullite | 0 | 0 | 0 | 0 | 0 | 10 | 0 | 0 | 10 |

**Shaping step**

There were adopted three shaping methods, i.e. slip casting, press molding and cold isostatic press (CIP). In the slip casting, the AT cullet obtained in the above AT cullet preparation step and the raw materials shown in Tables 2 to 5 were weighed so as to give a desired composition; thereto were added 22% by weight of water and $\emptyset.5\%$ by weight of a polyacrylic acid type deflocculant, and mixing was conducted in a pot mill for 5 hours; then, 1.5% by weight of a binder was added and vacuum degassing was conducted; the resulting mixture was cast into a gypsum mold to obtain a shaped material. In the press molding or the CIP, the AT cullet obtained in the above AT cullet preparation step and the raw materials shown in Tables 2 to 5 were weighed so as to give a desired composition; thereto were added $6\emptyset\%$ by weight of water and 2% by weight of a binder for pressing, and mixing was conducted in a pot mill for 5 hours; then, granulation was conducted using a spray dryer and the granulated powder were subjected to press molding or CIP using a mold.

**Sintering step**

The shaped material obtained in the above shaping step was kept at a temperature shown in Tables 2 to 5 for 4 hours to conduct sintering at the normal pressure.

Each AT cullet shown in Table 1 was measured for aluminum titanate as follows

**Measurement of aluminum titanate proportion**

A AT cullet was subjected to X-ray diffractometry in the range of $2\theta = 25\ 28.5°$ using a CuK$\alpha$ line. There were measured a peak (d = 3.356, $2\theta = 26.6$) intensity of aluminum titanate ($I_{AT}$), a peak (d = 3.245, $2\theta = 27.5$) intensity of rutile ($I_{Ru}$) and a peak (d = 3.479, $2\theta = 25.6$) intensity of corundum ($I_{Co}$). The aluminum titanate proportion of the AT cullet was calculated from these intensities using the following formula.

$$\text{Aluminum titanate proportion} = [I_{AT}/(I_{AT} + I_{Ru} + I_{Co}/\emptyset.75)] \times 1\emptyset\emptyset$$

Each sintered material (aluminum titanate structure) obtained in the above sintering step was measured for proportions of crystalline phases, average aspect ratio, average projected diameter, actual break strain and strength deterioration in heat cycle (which shows thermal shock resistance), as follows.

**Measurement of proportions of crystalline phases**

A sintered material was subjected to X-ray diffractometry in the range of $2\theta = 25\ 28.5°$ using a CuK$\alpha$ line. There were measured a peak (d = 3.356, $2\theta = 26.6$) intensity of aluminum titanate ($I_{AT}$), a peak (d = 3.245, $2\theta = 27.5$) intensity of rutile ($I_{Ru}$), a peak (d = 3.479, $2\theta = 25.6$) intensity of corundum ($I_{Co}$) and a peak (d = 3.428, $2\theta = 26.\emptyset$) intensity of mullite ($I_{Mu}$). The proportions of crystalline phases were calculated from these intensities using the following formulas.

$$I = I_{AT} + I_{Ru} + I_{Mu}/\emptyset.95 + I_{Co}/\emptyset.75$$
$$\text{Proportion of aluminum titanate crystalline phase (\%)} = (I_{AT}/I) \times 1\emptyset\emptyset$$
$$\text{Proportion of rutile crystalline phase (\%)} = (I_{Ru}/I) \times 1\emptyset\emptyset$$
$$\text{Proportion of mullite crystalline phase (\%)} = (I_{Mu}/\emptyset.95/I) \times 1\emptyset\emptyset$$
$$\text{Proportion of corundum crystalline phase (\%)} = (I_{Co}/\emptyset.75/I) \times 1\emptyset\emptyset$$

**Measurements of average aspect ratio and average projected diameter**

A sintered material was subjected to surface polishing; a photograph of the polished surface was taken using a scanning electron microscope at a magnification ($5\emptyset\emptyset$-$1,\emptyset\emptyset\emptyset$ times) at which the grains of the sintered material could be seen under reflected electrons; the photograph was subjected to image analysis using an image analyzer (KONTORON manufactured by ZEISS of Federal Republic of Germany) to determine the aspect ratio and average projected diameter of the sintered material. In the analysis, when a grain had crack(s) inside and was divided thereby, the crack(s) was (were) regarded as grain boundary (boundaries). This method enables accurate measurement for grains of complex shape.

**Measurement of actual break strain**

There was adopted the same method as used for measurement of the 4-point bending strength test of ceramics specified by JIS R 16$\emptyset$1. That is, the deflection amount "a" (mm) shown by a sintered material during the time period from the moment of load application to the destruction of the material was taken as a length in Fig. 1 from a point 1 (start of load application) to a point 4 which is an intersection between a base line 3 and a perpendicular drawn from a destruction point 2 to the base line 3; the thickness "t" (mm) of the specimen was also measured; the actual break strain of the specimen was calculated from "a" and "t" using the following formula.

$$\text{Actual break strain} = 6ta/1\emptyset\emptyset\emptyset$$

**Measurement of strength deterioration in heat cycle**

A sample for 4-point bending strength test by JIS R 16Ø1 was heated for 2Ø minutes in a 9ØØ°C furnace, then taken out and cooled by air blow for 1Ø minutes; this procedure was repeated 6ØØ times; then, the resulting material was measured for 4-point bending strength by JIS R 16Ø1; the strength deterioration in heat cycle, of the sample was calculated using the following formula.

$$\text{Strength deterioration in heat cycle} = [(\text{4-point bending strength before heat cycle - 4-point bending strength after heat cycle})/\text{4-point bending strength before heat cycle}] \times 1\emptyset\emptyset$$

In Tables 2 to 5 are shown the average aspect ratio, average projected diameter, actual break strain and strength deterioration in heat cycle, of each sintered material obtained above by selecting the raw materials, composition, shaping method and sintering temperature.

## Table 2

| | No. | 1 | 2 | 3 | 4 * | 5 * | 6 | 7 | 8 |
|---|---|---|---|---|---|---|---|---|---|
| Raw materials | AT cullet No. | 2 | 2 | 2 | 2 | 2 | 2 | 2 | 2 |
| | $Al_2O_3$ source | α-Alumina | α-Alumina | α-Alumina | α-Alumina | α-Alumina | α-Alumina | α-Alumina | α-Alumina |
| | $TiO_2$ source | Rutile | Rutile | Rutile | Rutile | Rutile | Rutile | Rutile | Rutile |
| | $SiO_2$ source | $SiO_2$ glass | $SiO_2$ glass | $SiO_2$ glass | $SiO_2$ glass | $SiO_2$ glass | $SiO_2$ glass | $SiO_2$ glass | $SiO_2$ glass |
| | $Fe_2O_3$ source | -- | -- | -- | -- | -- | -- | -- | -- |
| | MgO source | Magnesite | Magnesite | Magnesite | Magnesite | Magnesite | Magnesite | Magnesite | Magnesite |
| | Rare earth source | $Yb_2O_3$ | $Yb_2O_3$ | $Yb_2O_3$ | $Yb_2O_3$ | $Yb_2O_3$ | $Yb_2O_3$ | $Yb_2O_3$ | $Yb_2O_3$ |
| | Mullite source | Mullite | Mullite | Mullite | Mullite | Mullite | Mullite | Mullite | Mullite |
| Composition (wt%) | $Al_2O_3$ | 52 | 52 | 52 | 52 | 52 | 52 | 52 | 52 |
| | $TiO_2$ | 44 | 44 | 44 | 44 | 44 | 44 | 44 | 44 |
| | $SiO_2$ | 3 | 3 | 3 | 3 | 3 | 3 | 3 | 3 |
| | $Fe_2O_3$ | 0 | 0 | 0 | 0 | 0 | 0 | 0 | 0 |
| | MgO | 0.5 | 0.5 | 0.5 | 0.5 | 0.5 | 0.5 | 0.5 | 0.5 |
| | Rare earth | 0.5 | 0.5 | 0.5 | 0.5 | 0.5 | 0.5 | 0.5 | 0.5 |
| | Mullite | 10 | 10 | 10 | 10 | 10 | 10 | 10 | 10 |
| Amount of AT cullet added (wt%) | | 30 | 30 | 30 | 30 | 30 | 30 | 30 | 30 |
| Proportion of aluminum titanate in AT cullet | | 30 | 60 | 90 | 100 | 80 | 80 | 80 | 80 |
| Molding method | | Casting | Casting | Casting | Casting | Casting | Casting | Casting | Casting |
| Sintering temperature (°C) | | 1,500 | 1,500 | 1,500 | 1,500 | 1,400 | 1,450 | 1,475 | 1,500 |
| Aspect ratio | | 1.73 | 1.78 | 1.69 | 1.54 | 1.44 | 1.62 | 1.68 | 1.78 |
| Projected diameter (μm) | | 5.8 | 6.0 | 5.9 | 6.2 | 3.8 | 5.2 | 5.5 | 5.9 |
| Actual break strain ($\times 10^{-3}$) | | 6.2 | 6.3 | 6.1 | 4.5 | 4.1 | 5.6 | 6.0 | 6.2 |
| 4-point bending strength (kgf/mm$^2$) | | 2.3 | 2.2 | 1.8 | 1.0 | 3.5 | 2.4 | 2.1 | 2.3 |
| Strength deterioration | | -8 | -6 | -9 | -14 | -12 | -10 | -17 | -16 |
| Proportions of crystalline phases (%) | AT | 93 | 93 | 93 | 93 | 69 | 78 | 83 | 93 |
| | Ru | 0 | 0 | 0 | 0 | 19 | 12 | 8 | 0 |
| | Mu | 7 | 7 | 7 | 7 | 7 | 7 | 7 | 7 |
| | Co | 0 | 0 | 0 | 0 | 5 | 3 | 2 | 0 |

* indecates Comparative Example

## Table 3

| | No. | 9 | 10 | 11* | 12* | 13 | 14 | 15 | 16 |
|---|---|---|---|---|---|---|---|---|---|
| Raw materials | AT cullet No. | 2 | 2 | 2 | 2 | 2 | 2 | 2 | 3 |
| | Al₂O₃ source | α-Alumina | α-Alumina | α-Alumina | α-Alumina | α-Alumina | α-Alumina | α-Alumina | Bauxite |
| | TiO₂ source | Rutile | Rutile | Rutile | Rutile | Rutile | Rutile | Rutile | Anatase |
| | SiO₂ source | SiO₂ glass | SiO₂ glass | SiO₂ glass | SiO₂ glass | SiO₂ glass | SiO₂ glass | SiO₂ glass | SiO₂ glass |
| | Fe₂O₃ source | -- | -- | -- | -- | -- | -- | -- | Red iron oxide |
| | MgO source | Magnesite | Magnesite | Magnesite | Magnesite | Magnesite | Magnesite | Magnesite | Mg(NO₃)₂ |
| | Rare earth source | Yb₂O₃ | Yb₂O₃ | Yb₂O₃ | Yb₂O₃ | Yb₂O₃ | Yb₂O₃ | Yb₂O₃ | Y₂O₃ |
| | Mullite source | Mullite | Mullite | Mullite | Mullite | Mullite | Mullite | Mullite | -- |
| Composition (wt%) | Al₂O₃ | 52 | 52 | 52 | 52 | 52 | 52 | 47 | 50.7 |
| | TiO₂ | 44 | 44 | 44 | 44 | 44 | 44 | 43.5 | 45 |
| | SiO₂ | 3 | 3 | 3 | 3 | 3 | 3 | 3 | 4 |
| | Fe₂O₃ | 0 | 0 | 0 | 0 | 0 | 0 | 0 | 0 |
| | MgO | 0.5 | 0.5 | 0.5 | 0.5 | 0.5 | 0.5 | 0.5 | 0 |
| | Rare earth | 0.5 | 0.5 | 0.5 | 0.5 | 0.5 | 0.5 | 0 | 0.3 |
| | Mullite | 10 | 10 | 10 | 10 | 10 | 10 | 10 | 0 |
| Amount of AT cullet added (wt%) | | 30 | 30 | 30 | 3 | 5 | 20 | 100 | 50 |
| Proportion of aluminum titanate in AT cullet | | 30 | 60 | 90 | 100 | 80 | 80 | 80 | 60 |
| Molding method | | Casting | Casting | Casting | Casting | Casting | Casting | Casting | CIP |
| Sintering temperature (°C) | | 1,600 | 1,650 | 1,700 | 1,500 | 1,500 | 1,500 | 1,550 | 1,550 |
| Aspect ratio | | 1.74 | 1.73 | 1.76 | 1.54 | 1.62 | 1.70 | 1.82 | 1.81 |
| Projected diameter (μm) | | 6.4 | 8.2 | 11.5 | 5.0 | 5.3 | 5.4 | 6.2 | 9.1 |
| Actual break strain (×10⁻³) | | 6.3 | 5.9 | 5.8 | 4.3 | 5.1 | 5.6 | 7.5 | 8.4 |
| 4-point bending strength (kgf/mm²) | | 1.7 | 1.7 | 1.3 | 1.6 | 2.0 | 2.2 | 1.9 | 1.3 |
| Strength deterioration | | -11 | -2 | 33 | -5 | -3 | -9 | -10 | -6 |
| Proportions of crystalline phases (%) | AT | 93 | 93 | 93 | 93 | 93 | 93 | 93 | 98 |
| | Ru | 0 | 0 | 0 | 0 | 0 | 0 | 0 | 0 |
| | Mu | 7 | 7 | 7 | 7 | 7 | 7 | 7 | 2 |
| | Co | 0 | 0 | 0 | 0 | 5 | 3 | 2 | 0 |

* indicates Comparative Example

Table 4

| | No. | 17 | 18 | 19 | 20 | 21 | 22 | 23 |
|---|---|---|---|---|---|---|---|---|
| Raw materials | AT cullet No. | 6 | 1 | 5 | 9 | 8 | 3 | 7 |
| | $Al_2O_3$ source | Bauxite | α-Alumina | α-Alumina | Bauxite | Bauxite | Bauxite | Bauxite |
| | $TiO_2$ source | Anatase | Anatase | Anatase | Anatase | Rutile | Rutile | Rutile |
| | $SiO_2$ source | $SiO_2$ glass | Clay | Clay | Clay | Clay | $SiO_2$ glass | $SiO_2$ glass |
| | $Fe_2O_3$ source | Red iron oxide | Red iron oxide | Ilmenite | Ilmenite | Ilmenite | Ilmenite | Ilmenite |
| | MgO source | $MgCl_2$ | $MgCl_2$ | $MgCl_2$ | $MgCl_2$ | $MgOH)_2$ | $MgOH)_2$ | $MgOH)_2$ |
| | Rare earth source | $CeO_2$ | $Er_2O_3$ | $Pr_6O_{11}$ | $Nd_2O_3$ | $Sm_2O_3$ | $La_2O_3$ | $CeCl_3$ |
| | Mullite source | Mullite | Kaolin | Kaolin | Kaolin | Mullite | Mullite | Mullite |
| Composition (wt%) | $Al_2O_3$ | 41 | 41.9 | 56 | 42 | 48 | 45 | 48 |
| | $TiO_2$ | 46 | 48 | 40 | 52 | 42.5 | 45 | 42 |
| | $SiO_2$ | 7 | 2 | 2 | 3 | 5 | 3 | 3 |
| | $Fe_2O_3$ | 3 | 7 | 1 | 2 | 2 | 0 | 6 |
| | MgO | 1 | 0.5 | 0.5 | 0.5 | 2 | 5 | 0 |
| | Rare earth | 2 | 0.6 | 0.5 | 0.5 | 0.5 | 2 | 1 |
| | Mullite | 10 | 5 | 30 | 20 | 15 | 20 | 10 |
| Amount of AT cullet added (wt%) | | 50 | 50 | 50 | 50 | 50 | 50 | 50 |
| Proportion of aluminum titanate in AT cullet | | 60 | 60 | 60 | 60 | 60 | 60 | 60 |
| Molding method | | CIP | CIP | Press | Press | Press | Press | Press |
| Sintering temperature (°C) | | 1,550 | 1,550 | 1,550 | 1,550 | 1,550 | 1,550 | 1,550 |
| Aspect ratio | | 1.63 | 1.76 | 1.68 | 1.64 | 1.71 | 1.69 | 1.75 |
| Projected diameter (μm) | | 7.3 | 8.0 | 5.4 | 6.8 | 5.5 | 6.0 | 6.2 |
| Actual break strain ($\times 10^{-3}$) | | 5.7 | 5.3 | 5.4 | 6.1 | 5.5 | 6.0 | 5.8 |
| 4-point bending strength ($kgf/mm^2$) | | 2.3 | 1.9 | 2.8 | 2.2 | 2.0 | 2.4 | 2.3 |
| Strength deterioration | | -6 | -11 | -7 | -16 | -15 | -8 | -4 |
| Proportions of crystalline phases (%) | AT | 93 | 96 | 82 | 88 | 89 | 86 | 93 |
| | Ru | 0 | 0 | 0 | 0 | 0 | 19 | 12 |
| | Mu | 7 | 4 | 18 | 12 | 11 | 14 | 7 |
| | Co | 0 | 0 | 0 | 0 | 0 | 0 | 0 |

\* indicates Comparative Example

## Table 5

| No. | | 24 | 25 | 26* | 27* | 28* | 29* |
|---|---|---|---|---|---|---|---|
| Raw materials | AT cullet No. | 4 | 1 | 8 | -- | 7 | -- |
| | $Al_2O_3$ source | Bauxite | Bauxite | $\alpha$-Alumina | $\alpha$-Alumina | $\alpha$-Alumina | $\alpha$-Alumina |
| | $TiO_2$ source | Rutile | Rutile | Rutile | Rutile | Rutile | Rutile |
| | $SiO_2$ source | $SiO_2$ glass | $SiO_2$ glass | Clay | Quartz | -- | $SiO_2$ glass |
| | $Fe_2O_3$ source | Ilmenite | Ilmenite | -- | -- | -- | Red iron oxide |
| | MgO source | $Mg(OH)_2$ | $Mg(OH)_2$ | -- | -- | -- | -- |
| | Rare earth source | $YbCl_3$ | $Y(NO_3)_3$ | $Yb_2O_3$ | -- | $Y_2O_3$ | -- |
| | Mullite source | Mullite | Mullite | -- | -- | Kaolin | -- |
| Composition (wt%) | $Al_2O_3$ | 51 | 48 | 50 | 49 | 60 | 56 |
| | $TiO_2$ | 45 | 44 | 42 | 47 | 27 | 39 |
| | $SiO_2$ | 2 | 4 | 3 | 4 | 0 | 3 |
| | $Fe_2O_3$ | 1 | 2 | 0 | 0 | 11 | 2 |
| | MgO | 0.5 | 1 | 0 | 0 | 0 | 0 |
| | Rare earth | 0.5 | 1 | 5 | 0 | 2 | 0 |
| | Mullite | 10 | 0 | 0 | 0 | 25 | 0 |
| Amount of AT cullet added (wt%) | | 100 | 90 | 90 | 0 | 90 | 0 |
| Proportion of aluminum titanate in AT cullet | | 60 | 60 | 100 | -- | 100 | -- |
| Molding method | | Press | Press | Press | Press | Press | Casting |
| Sintering temperature (°C) | | 1,550 | 1,550 | 1,500 | 1,430 | 1,500 | 1,375 |
| Aspect ratio | | 1.79 | 1.80 | 1.47 | 1.41 | 1.50 | 1.40 |
| Projected diameter(μm) | | 6.0 | 8.1 | 6.8 | 2.9 | 7.5 | 2.3 |
| Actual break strain ($\times 10^{-3}$) | | 6.1 | 7.5 | 3.5 | 3.4 | 4.4 | 2.8 |
| 4-point bending strength ($kgf/mm^2$) | | 2.5 | 1.4 | 4.1 | 3.8 | 1.8 | 4.5 |
| Strength deterioration | | -17 | -9 | 3 | -4 | 2 | -15 |
| Proportions of crystalline phases (%) | AT | 93 | 98 | 96 | 70 | 83 | 93 |
| | Ru | 8 | 0 | 2 | 25 | 0 | 0 |
| | Mu | 7 | 2 | 2 | 0 | 17 | 7 |
| | Co | 0 | 0 | 0 | 5 | 0 | 0 |

* indicates Comparative Example

As is clear from Tables 2 to 5, the aluminum titanate structures containing crystal grains having an average aspect ratio of 1.6 or more and an average projected diameter of 5-1Ø μm are low in strength deterioration in heat cycle and high (5x1Ø⁻³ or more) in actual break strain. In Tables 2 to 5, those with a * mark are Comparative Examples and none of them satisfies the requirements specified by the present invention. Incidentally, 27*, 28*, 29* and 3Ø* are tests conducted for confirming Japanese Patent Publication No. 3629/1982, Japanese Patent Application Kokai No. 16476Ø/1989, Japanese Patent Application Kokai No. 257165/1989 and Japanese Patent Application Kokai No. 3Ø5854/1989, respectively.

As described above, the aluminum titanate structure according to the present invention is constituted of crystal grains having an average aspect ratio of 1.6 or more and an average projected diameter of 5-1Ø μm and therefore has excellent thermal shock resistance and high actual break strain. Hence, the aluminum titanate structure exhibits excellent effects when casted with metal(s) to produce a ceramic material for use in, for example, port liner. When used in engine head port, the aluminum titanate structure is effective because it shows no strength deterioration during heat cycle.

The aluminum titanate structure comprising crystal grains having the above-mentioned properties, as a main constituent phase, can be produced according to the process of the present invention which uses, as a starting material, at least a AT cullet whose aluminum titanate proportion is a certain level or below.

## Claims

1. An aluminum titanate structure comprising, as a main phase, crystal grains having an average aspect ratio of 1.6 or more and an average projected diameter of 5-1Ø μm.

2. An aluminum titanate structure according to Claim 1, further comprising a vitreous phase and mullite, or a vitreous phase and rare earth element(s), or a vitreous phase, mullite and rare earth element(s).

3. An aluminum titanate structure according to Claim 1, having an actual break strain of 5x1Ø⁻³ or more and a strength deterioration in heat cycle, of Ø or less.

4. A process for producing an aluminum titanate structure, which comprises mixing an aluminum titanate cullet (a) obtained by mixing a plurality of raw materials selected from the group consisting of an $Al_2O_3$ source, a $TiO_2$ source, a $SiO_2$ source, a $Fe_2O_3$ source, a MgO source, a rare earth element source and a mullite source, calcining the mixture so as to give an aluminum titanate proportion of 9Ø% or more, and grinding the calcination product, with a plurality of raw materials (b) selected from the group consisting of an $Al_2O_3$ source, a $TiO_2$ source, a $SiO_2$ source, a $Fe_2O_3$ source, a MgO source, a rare earth element source and a mullite source, shaping the mixture as a starting material and sintering the shaped material.

5. A process according to Claim 4, wherein the aluminum titanate cullet (a) is used in an amount of 5% by weight or more.

6. A process according to Claim 4, wherein the aluminum titanate cullet (a) is used in an amount of 2Ø% by weight or more.

7. A process according to Claim 4 or 5, wherein in obtaining the aluminum titanate cullet (a), the plurality of raw materials selected from the group consisting of an $Al_2O_3$ source, a $TiO_2$ source, a $SiO_2$ source, a $Fe_2O_3$ source, a MgO source, a rare earth element source and a mullite source are mixed in a liquid phase.

# F I G. 1